# DEMANDE DE BREVET EUROPEEN

(11) **EP 0 857 881 A1**
(43) Date de publication de la demande: **12.08.1998**
(21) Numéro de dépôt: 98400071.1
(22) Date de dépôt: 16.01.1998
(51) Int. Cl.: F16C 1/14, B60K 23/02

(54) **Dispositif pour l'accrochage d'un embout de câble à un levier de commande**

(30) Priorité: 06.02.1997 FR 9701333
(71) Demandeur: AUTOMOBILES PEUGEOT, 75116 Paris (FR); AUTOMOBILES CITROEN, 92200 Neuilly-sur-Seine (FR)
(72) Inventeur: Carion, Olivier M., 25200 Montbeliard (FR)
(74) Mandataire: Gendraud, Pierre

(57) **Abrégé**

Ce dispositif pour l'accrochage d'un embout (12) de câble (13) à un levier de commande (1), comporte une chape (5) articulée par un axe (9) sur ce levier (1). Cette chape est munie d'un logement (24) pour l'embout (12) du câble en position d'utilisation où celui-ci traverse une embase (10b) de la chape (5).

L'embase (10b) est propre à prendre appui, au repos, sur un guide fixe (18) du câble, de manière à aligner coaxialement la chape et ce guide.

Selon la présente invention, la chape (5) comprend des moyens de guidage (21, 22) de l'embout (12) de câble pour son engagement dans la chape et sa mise en place dans le logement (24).

Application au montage de câble d'embrayage de véhicule automobile.

## Description

L'invention concerne un dispositif pour l'accrochage en aveugle d'un embout de câble à un levier de commande.

Elle se rapporte plus particulièrement à l'accrochage d'un câble sur une pédale, notamment pour la commande d'un embrayage de véhicule automobile situé dans un compartiment moteur séparé de la pédale par une cloison. La pédale d'embrayage étant disposée de manière usuelle sous le tableau de bord du véhicule, on comprend qu'il soit très mal aisé de venir accrocher sur sa partie supérieure très peu accessible un câble y parvenant en traversant la cloison.

On connaît des dispositifs qui permettent de faciliter le montage d'un tel câble; généralement, ces dispositifs comportent une chape solidaire d'un embout du câble et d'un pivot coopérant avec un crochet situé dans la partie supérieure de la pédale, ce crochet s'engageant dans un évidement de la chape prévu entre l'embout du câble et le pivot.

De tels dispositifs permettent un accrochage aisé de la chape sur la pédale mais nécessitent soit un pré-montage de l'embout de câble sur la chape qui présente alors une forme complexe, soit un embout de câble présentant lui aussi une forme particulière.

L'invention a pour but de remédier à ce type d'inconvénient et plus particulièrement de proposer un dispositif simple apte à établir la liaison entre le câble et la pédale de commande et à être mis en place pratiquement en « aveugle » en n'ayant accès au câble que du côté de la cloison opposé à la pédale.

A cet effet, l'invention a pour objet un dispositif pour l'accrochage d'un embout de câble à un levier de commande, du type comportant une chape articulée par un axe sur ledit levier et munie d'un logement pour l'embout du câble en position d'utilisation où celui-ci traverse une embase de la chape, l'embase étant propre à prendre appui, au repos, sur un guide fixe du câble, de manière à s'aligner coaxialement avec ce guide, caractérisé en ce que la chape comprend des moyens de guidage de l'embout de câble pour son engagement dans la chape et sa mise en place dans le logement de la chape.

Selon une caractéristique avantageuse de la présente invention, ces moyens de guidage sont constitués d'une gorge longitudinale légèrement plus large que l'embout, dans laquelle est agencée une rampe qui traverse l'axe moyen de la chape reliant les centres de l'axe d'articulation et de l'embase et qui est munie, pour le passage du câble jusqu'à sa position d'utilisation, d'une rainure longitudinale située au droit d'un plan médian de la chape passant par l'axe moyen.

Selon une autre caractéristique avantageuse de la présente invention, la rampe s'étend de l'embase vers l'axe d'articulation avec un premier tronçon formant une pente depuis l'axe moyen jusqu'à un deuxième tronçon écarté de cet axe, sensiblement parallèle à lui et prolongé par un troisième tronçon présentant une inclinaison vers l'axe moyen et vers l'embase et aboutissant au logement.

Selon une variante avantageuse de la présente invention, la chape comporte, sensiblement au droit d'une zone d'évacuation pour le câble quittant le deuxième tronçon de la rampe, une contre-rampe présentant une inclinaison vers le pivot d'articulation de manière à dévier vers l'axe moyen l'embout du câble lors de son passage, au montage, dans cette zone d'évacuation.

D'autres caractéristiques et avantages de l'invention apparaîtront à la lecture de la description détaillée qui va suivre, pour la compréhension de laquelle on se reportera aux dessins annexés, dans lesquels:
La figure 1 est une vue latérale en coupe d'une partie d'une pédale destinée à être reliée à un câble par une chape selon l'invention, dans une disposition de montage où le câble est guidé dans la chape vers sa position,
La figure 2 est une vue similaire à la figure 1 dans laquelle le câble est en position d'utilisation,
La figure 3 est une vue en perspective de la chape,
La figure 4 est une vue suivant la flèche F de la figure 3, de la chape, à plus grande échelle, et
La figure 5 est une vue en coupe suivant la ligne IV-IV de la figure 4.

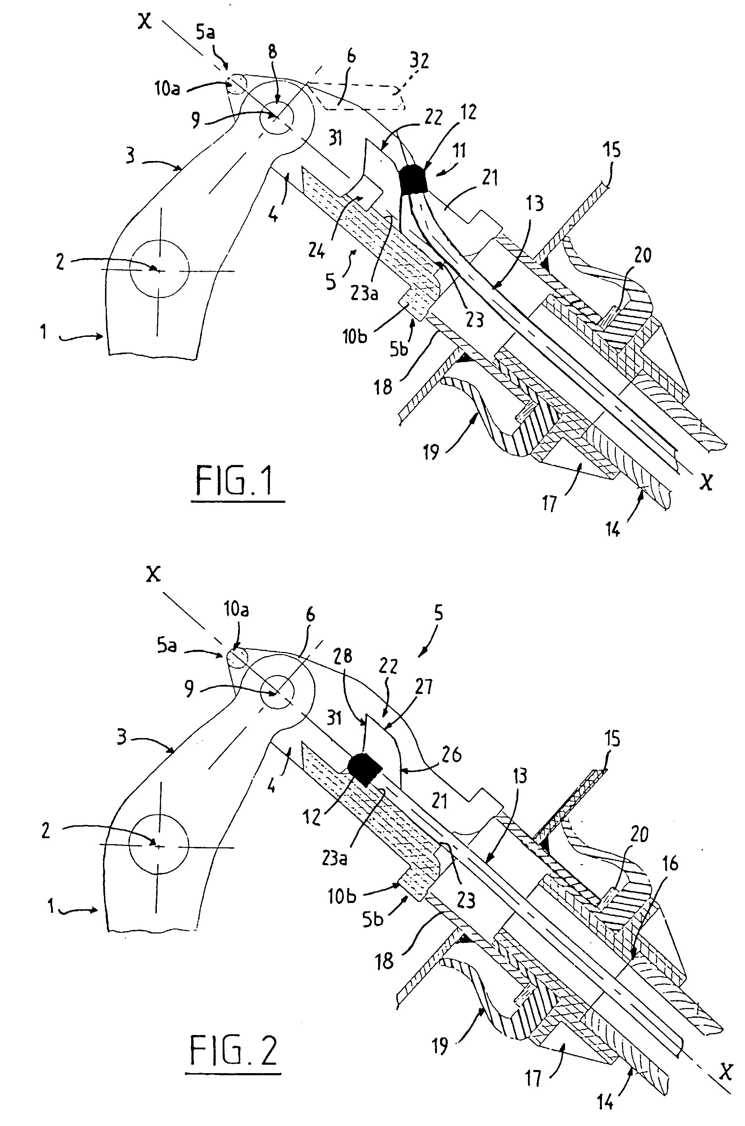

On a représenté sur les figures 1 et 2, la partie supérieure d'une pédale 1 de commande, du type commande d'embrayage, pivotant sur un axe fixe 2 transversal et comportant dans son prolongement supérieur un bras 3.

L'extrémité du bras 3 est engagée dans un évidement 4 d'une chape 5 délimité transversalement par deux parois latérales 6, 7 parallèles, qui sont perpendiculaires à l'axe 2 d'articulation de la pédale 1.

Chacune des parois latérales 6, 7 est pourvue respectivement d'un orifice 6a, 7a transversal, parallèle à l'axe 2, de manière à recevoir un axe 9 traversant le bras 3 par un orifice 8 et constituant un pivot -ou axe d'articulation- de la chape sur la pédale.

Les deux parois latérales sont réunies entre elles par une embase circulaire 10b et par un tronçon transversal 10a délimitant respectivement deux extrémités opposées 5b et 5a de la chape 5.

La chape 5 comporte dans l'évidement 4, entre l'axe 9 et l'extrémité 5b, un dispositif d'accrochage 11 pour un embout 12 d'un câble 13 s'étendant orthogonalement à l'axe 9 d'articulation de la chape.

Le câble 13 est monté coulissant dans une gaine 14 et son extrémité opposée à l'embout 12 est reliée à un organe commandé, dans notre cas un embrayage de véhicule automobile, situé dans un compartiment moteur qui est séparé par une cloison 15 de l'habitacle dans lequel se trouve la pédale.

On ne décrira pas ici cette extrémité opposée du câble 13 ni son moyen de fixation à l'embrayage, qui sont usuels et sortent du cadre de l'invention.

L'extrémité 16 de la gaine 14, du côté de l'embout 12 du câble, vient en appui sur une douille 17 qui est fixée coaxialement à un guide 18 par l'intermédiaire d'une coiffe d'étanchéité 19 et d'une rondelle 20.

Le guide 18 est constitué, par exemple, d'un tube en métal de section circulaire solidaire de la cloison 15 que traverse le câble 13.

L'embase circulaire 10b, comme visible à la figure 2, prend appui sur le guide 18, dans la disposition de la pédale au repos où son bras 3 est sollicité vers la cloison 15 par traction du câble.

Selon la présente invention, le dispositif d'accrochage 11 de la chape 5 est constitué d'une gorge longitudinale 21 légèrement plus large que l'embout 12 et dans laquelle est agencée une rampe 22 pour le guidage de l'embout lors de son montage, et d'un logement central 24 pour l'embout 12 du câble 13 en position d'utilisation.

La gorge 21 est délimitée par les deux parois latérales 6, 7 et par un fond 23 proche d'un axe moyen longitudinal X-X de la chape, passant par les centres de l'axe d'articulation 9 et de l'embase 10b; cet axe X-X est confondu avec l'axe du câble 13 en position d'utilisation et avec l'axe de la douille 17, comme visible sur la figure 2.

A l'intérieur de cette gorge 21, la rampe 22 s'étend de l'embase 10b à l'axe d'articulation 9 de la chape, en comprenant un premier tronçon 26 partant du fond 23 de la gorge 21 et formant une pente jusqu'à un deuxième tronçon 27 parallèle au fond 23 et prolongé par un troisième tronçon 28 incliné vers l'axe moyen X-X et vers l'embase 10b en aboutissant au logement central 24.

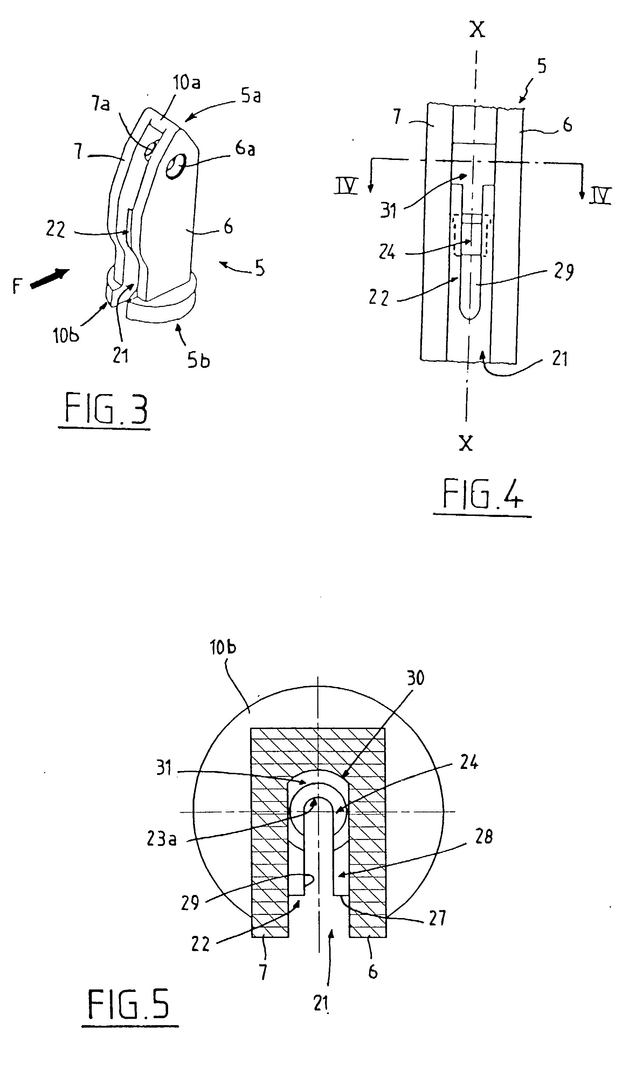

Une rainure longitudinale 29, au droit du plan médian passant par l'axe moyen X-X de la chape 5, comme visible sur la figure 4, est réalisée dans la rampe 22, son fond 23a prolongeant longitudinalement le fond 23 de la gorge 21.

Cette rainure présente une largeur légèrement supérieure au diamètre du câble, permettant ainsi son passage.

Dans l'axe longitudinal de la chape, dans la partie de l'évidement 4 située entre la gorge 21 et l'axe 9 d'articulation, sont réalisés un premier alésage 30 tronqué par les parois 6 et 7, comme visible sur la figure 5, définissant ainsi une zone d'évacuation 31 pour l'embout, au-delà de la rampe 22, et un second alésage 24 coaxial au premier définissant le logement pour l'embout 12 du câble 13 en position d'utilisation.

De préférence, le logement 24 a une forme sensiblement tronconique s'évasant vers l'axe 9 de manière à garantir un bon coincement de l'embout et toute absence de vibration.

En variante possible à la réalisation décrite ci-dessus, on notera que la chape 5 peut comporter sensiblement en prolongement du deuxième tronçon 27 de la rampe 22, une contre-rampe 32 présentant une inclinaison vers le pivot d'articulation 9, comme représenté en traits interrompus sur la figure 1, de manière à ramener vers l'axe X-X l'embout 12 du câble 13, lors de son évacuation du deuxième tronçon 27 vers la zone 31.

On va maintenant en relation avec les figures 1 et 2 expliquer le mode d'utilisation du dispositif d'accrochage.

La chape étant préalablement liée à la pédale par l'axe 9 et placée dans la position représentée sur la figure 1, c'est-à-dire avec l'embase 10b en appui sur le guide fixe 18, on introduit le câble et la gaine dans le corps de la douille 17, par le côté de la cloison 15 opposé à la pédale. La gaine vient s'immobiliser en prenant appui sur la douille. On fait subir alors au câble une translation suivant l'axe longitudinal X-X, provoquant son enfoncement dans la chape, à travers l'extrémité 5b. L'embout glisse sur le fond 23 et sur la rampe 22 de la gorge 21.

On notera que la pédale 1 étant classiquement immobilisée par un ressort de rappel, non représenté, la chape ne bouge pas sous la poussée de l'embout 12 heurtant la rampe 22; celui-ci est guidé et dévié par cette rampe avant d'être libéré dans la zone d'évacuation 31, où il est rappelé vers l'axe X-X sous l'action de l'élasticité du câble et éventuellement de la contre-rampe 32. Le câble s'engage alors dans la rainure 29.

Au moment où on exerce une traction sur le câble, par action sur celui-ci du côté du compartiment moteur, l'embout vient automatiquement se loger dans l'alésage 24, ce qui permet l'amarrage à coup sûr du câble sur la chape 5.

On comprend donc que cette mise en place et cette fixation de la liaison ont pu se faire aisément et en aveugle, en n'accédant au câble que dans le compartiment moteur, sans qu'il soit nécessaire de suivre visuellement l'opération d'accrochage du côté de l'habitacle.

Un tel dispositif ne génère aucun bruit, du fait qu'il ne nécessite aucun jeu, l'embout 12 pouvant être logé par coincement dans le logement 24.

Un tel dispositif présente l'avantage d'être de réalisation simple et peu coûteuse.

Bien entendu, l'invention n'est pas limitée à l'application décrite ci-dessus et peut être utilisée chaque fois qu'une connexion d'un câble est à effectuer aveugle.

## Revendications

1. Dispositif pour l'accrochage d'un embout (12) de câble (13) à un levier de commande (1), comportant une chape (5) articulée par un axe (9) sur ce levier (1) et munie d'un logement (24) pour l'embout (12) du câble en position d'utilisation où celui-ci traverse une embase (10b) de la chape (5), l'embase (10b) étant propre à prendre appui, au repos, sur un guide fixe (18) du câble de manière à aligner coaxialement la chape et ce guide, caractérisé en ce que la chape comprend des moyens de guidage (21, 22) de l'embout de câble pour son engagement dans la chape et sa mise en place dans le logement (24).

2. Dispositif selon la revendication 1, caractérisé en ce que ces moyens de guidage sont constitués d'une gorge longitudinale (21) légèrement plus large que l'embout (12) et dans laquelle est agencée une rampe (22) qui traverse l'axe moyen (X-X) de la chape reliant les centres de l'axe d'articulation (9) et de l'embase (10b) et qui est munie, pour le passage du câble jusqu'à sa position d'utilisation, d'une rainure longitudinale (29) située au droit d'un plan médian passant par l'axe moyen (X-X).

3. Dispositif selon la revendication 2, caractérisé en ce que la gorge (21) est délimitée par deux parois latérales (6, 7) constituant la chape et par un fond (23) comportant la rampe (22).

4. Dispositif selon l'une des revendications 2 et 3, caractérisé en ce que la rampe (22) s'étend de l'embase (10b) vers l'axe d'articulation (9) avec un premier tronçon (26) formant une pente depuis l'axe moyen (X-X) jusqu'à un deuxième tronçon (27) écarté de cet axe, sensiblement parallèle à celui-ci et prolongé par un troisième tronçon (28) présentant une inclinaison vers l'axe moyen (X-X) et vers l'embase (10b) et aboutissant au logement (24).

5. Dispositif selon la revendication 4, caractérisé en ce que le logement (24) pour l'embout (12) du câble (13) en position d'utilisation étant formé par un alésage, un second alésage (30) coaxial au logement est réalisé dans la chape de manière à délimiter une zone d'évacuation (31) pour l'embout quittant le deuxième tronçon (27) de la rampe (22).

6. Dispositif selon l'une des revendications 2 à 5, caractérisé en ce que la rainure longitudinale (29) est pourvue d'un fond (23a) proche de l'axe moyen (X-X) et en ce qu'elle présente une largeur légèrement supérieure au diamètre du câble.

7. Dispositif selon l'une des revendication 4 à 6, caractérisé en ce que la chape (5) comporte, sensiblement au droit d'une zone d'évacuation (31) pour l'embout quittant le deuxième tronçon (27) de la rampe (22), une contre-rampe (32) présentant une inclinaison vers le pivot d'articulation (9) de manière à ramener vers l'axe moyen (X-X) l'embout (12) du câble (13), lors de son évacuation susdite.

8. Dispositif selon l'une des revendications précédentes, caractérisé en ce que le logement (24) a une forme sensiblement tronconique.

9. Chape pour l'accrochage d'un embout (12) de câble à un levier de commande caractérisé en ce qu'elle comporte des moyens de guidage (21, 22) conformément à l'une quelconque des revendications 2 à 7.
